Europäisches Patentamt

European Patent Office

Office européen des brevets

(11) Veröffentlichungsnummer: **0 202 632**
**A2**

(12) **EUROPÄISCHE PATENTANMELDUNG**

(21) Anmeldenummer: 86106741.1

(51) Int. Cl.⁴: **F 21 P 5/02**

(22) Anmeldetag: 16.05.86

(30) Priorität: **17.05.85 DE 3517852**

(43) Veröffentlichungstag der Anmeldung:
26.11.86 Patentblatt 86/48

(84) Benannte Vertragsstaaten:
AT BE CH DE FR GB IT LI LU NL SE

(71) Anmelder: Vögeli, Werner
Heinrichstrasse 248
CH-8005 Zürich(CH)

(72) Erfinder: Vögeli, Werner
Heinrichstrasse 248
CH-8005 Zürich(CH)

(74) Vertreter: Klunker . Schmitt-Nilson . Hirsch
Winzererstrasse 106
D-8000 München 40(DE)

(54) Lichteffektanlage für Diskotheken.

(57) In Lichteffektanlagen für Diskotheken wird ein Laserstrahl von einer Laserlichtquelle nacheinander auf verschiedene, in einem Saal verteilt angeordnete Ablenksysteme, z. B. Spiegelkugeln, Drehspiegel, Spektralgitter oder dergleichen gegeben. Da die Ablenksysteme von der Laserlichtquelle eine beträchtliche Entfernung aufweisen, wird das Licht sehr stark gedämpft. Eine nur geringe Winkelabweichung des Laserstrahls machte bislang ein häufiges Nachjustieren erforderlich. Um die starke Dämpfung zu vermeiden und das Nachjustieren überflüssig zu machen, wird das Licht von der Laserlichtquelle über einzelne Laserlichtbündel zu den verschiedenen Ablenksystemen geführt.

EP 0 202 632 A2

Croydon Printing Company Ltd.

Die Erfindung betrifft eine Lichteffektanlage gemäß
Oberbegriff des Anspruchs 1.

In den letzten Jahren erfreuen sich mit Laserlicht arbeitende
Lichteffektanlagen für Diskotheken, Tanzsäle oder ähnliche
Vergnügungsstätten zunehmender Beliebtheit. Bei bekannten
Lichteffektanlagen der im Oberbegriff des Anspruchs 1 genannten
Art ist an  oder in einer Seitenwand eines Saals die Laserlichtquelle angeordnet, und unter der Decke des Saals sind
an verschiedenen Stellen Ablenksysteme angebracht, bei
denen es sich z. B. um Spiegelkugeln, Spektralgitter, Dreh-
oder Schwingspiegel und dergleichen handelt. Der Laserlichtquelle ist eine sogenannte optische Bank nachgeordnet,
die mit Hilfe eines elektromagnetisch verstellten Spiegels
das von der Laserquelle abgegebene Licht nacheinander auf
die verschiedenen Ablenksysteme lenkt.

Um einen optimalen optischen Effekt zu erzielen, müssen
die von den Ablenksystemen erzeugten Lichtstrahlen bei
ihrem Durchtritt durch die Luft sichtbar sein. Dies ist
bekanntlich nur dann der Fall, wenn die Luft Schwebeteilchen
enthält, an denen die Lichtstrahlen reflektiert und gestreut werden. Um den optischen Effekt von Lichteffektanlagen
zu erhöhen, ist es bereits üblich, durch spezielle Einrichtungen künstliche Nebel zu erzeugen, die die Laserstrahlen
deutlich sichtbar machen.

Die Abstände zwischen der Laserlichtquelle und den einzelnen
Ablenksystemen sind beträchtlich. In der Luft wird der
von der Laserlichtquelle abgestrahlte Laserstrahl gedämpft,
und zwar besonders stark, wenn der Raum künstlich benebelt
wird. Um den von den von den Ablenksystemen abgegebenen

0202632

Laserlichtstrahlen erzeugten optischen Effekt nicht zu
beeinträchtigen, muß die Laserlichtquelle eine beträchtliche
Ausgangsleistung aufweisen, damit der an dem Ablenksystem
ankommende, gedämpfte Lichtstrahl noch eine bestimmte
Intensität besitzt. Eine sehr hohe Laserleistung ist aber
nicht ungefährlich, wenn die Möglichkeit besteht, daß
sich Personen in dem Strahlengang bewegen.

Ein weiteres Problem ergibt sich dadurch, daß aufgrund
der beträchtlichen Entfernungen zwischen Laserlichtquelle
und Ablenksystemen eine sehr genaue Justierung des von
der Laserlichtquelle abgegebenen Laserstrahls erforderlich
ist; denn die Ablenksysteme sind relativ klein, es handelt
sich z. B. um einen 4 x 4 cm großen Schwingspiegel, und
eine nur sehr geringfügige Winkelabweichung des von der
Laserlichtquelle bzw. der dieser nachgeordneten optischen
Bank abgegebenen Laserstrahls führt dazu, daß der Ablenkspiegel nicht mehr getroffen wird. Deshalb sind in sehr
kurzen Abständen immer wieder Nachjustierungen erforderlich.
die einen beträchtlichen Zeitaufwand bedingen.

Der Erfindung liegt die Aufgabe zugrunde, eine Lichteffektanlage
der im Oberbegriff des Anspruchs 1 angegebenen Art derart
weiterzubilden, daß man ohne Beeinträchtigung der gewünschten
optischen Effekte mit einem Laser relativ geringer Leistung
auskommt und das bei den bekannten Anlagen erforderliche
Nachjustieren praktisch überflüssig wird.

Diese Aufgabe wird durch die im kennzeichnenden Teil des
Anspruchs 1 angegebenen Merkmale gelöst.

Bei der erfindungsgemäßen Lichteffektanlage durchläuft der von der Laserlichtquelle abgegebene Laserstrahl also nicht die Luft, sondern ein Lichtleiterbündel. Da die heute verfügbaren Glasfasern eine relativ schwache Dämpfung besitzen, wird der Laserstrahl in dem Lichtleiterbündel wesentlich weniger stark gedämpft als bei Durchtritt durch die Luft. Deshalb kann bei gegebener Intensität im Bereich des jeweiligen Ablenksystems mit einer relativ schwachen Laserlichtquelle gearbeitet werden. Grundsätzlich wäre es denkbar, bei jedem Ablenksystem eine separate Laserlichtquelle vorzusehen, jedoch verbietet sich dies aus sicherheitstechnischen und optischen Gründen; denn die zur Erzeugung eines relativ starken Laserstrahls benötigten Laserlichtquellen, z. B. ein Argon-Laser, weisen ein beträchtliches Gewicht und beträchtliche Abmessungen auf, so daß die Anbringung unter der Decke eines Saals technisch nicht möglich ist. Außerdem würde eine Vielzahl großer Laserlichtquellen unter der Decke einen Saal optisch verunstalten. Bei der erfindungsgemäßen Anlage wird jedem einzelnen Ablenksystem ein Lichtleiterbündel zugeführt. Diese Lichtleiterbündel können unauffällig an der Decke eines Saals angebracht werden.

Die Lichteintrittsseite jedes Lichtleiterbündels befindet sich in direkter Nachbarschaft der Laserlichtquelle bzw. einer dieser nachgeordneten, optischen Bank. Wenn nun diese optische Bank bzw. der oder die Ablenkspiegel der optischen Bank sich mit der Zeit etwas verstellen, fällt immer noch ausreichend viel Licht auf die Eintrittsseite der jeweiligen Lichtleiterbündel. Ein Nachjustieren ist also nicht erforderlich. Gegebenenfalls können auf den einzelnen Lichteintrittsseiten der Lichtleiterbündel Linsen oder dergleichen vorgesehen sein, die das Licht auf die Lichteintrittsseite der Glasfasern konzentrieren.

Zur Erzielung besonderer Effekte kann vorgesehen sein,
daß auf die Lichtaustrittsseite des Lichtleiterbündels
eine Optik aufgesetzt ist, die das Laserlicht bündelt,
aufweitet oder parallelisiert.

Grundsätzlich ist die Erfindung anwendbar bei einer Anlage
mit einer einzigen Laserlichtquelle und einem einzigen
Ablenksystem. In der Regel sind jedoch eine Vielzahl von
Ablenksystemen in einem mit Lichteffekten auszufüllenden
Raum vorhanden. Dann ist der Laserlichtquelle eine optische
Bank nachgeordnet, die mittels eines beispielsweise elektromechanisch verstellbaren Spiegels das Laserlicht nacheinander
auf die Lichteintrittsseiten verschiedener, zu verschiedenen Ablenksystemen führender Lichtleiterbündel gibt.

Im folgenden wird ein Ausführungsbeispiel der Erfindung
anhand der Zeichnung näher erläutert. Es zeigen:

Fig. 1      eine schematische Ansicht eines Teils einer
            Diskothek, in der die erfindungsgemäße Lichtanlage installiert ist,

Fig. 2      eine schematische Skizze eines Teils eines
            Ablenksystems, auf das die Lichtaustrittsseite
            eines Lichtleiterbündels gerichtet ist.

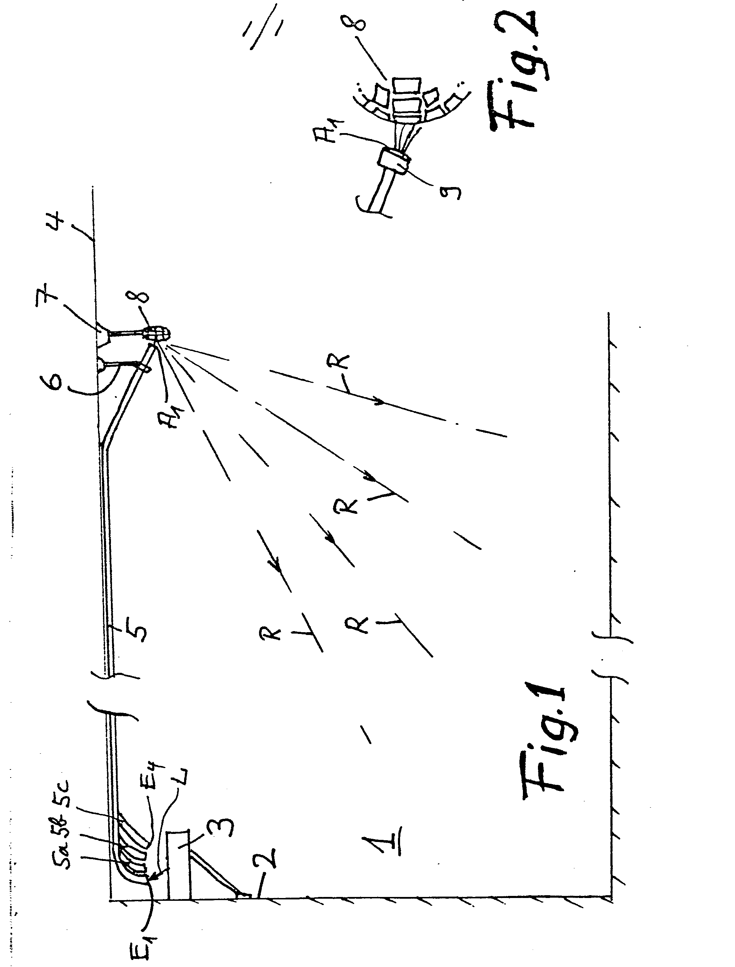

Fig. 1 zeigt schematisch einen Teil eines Querschnitts
eines Raums 1, in dem eine mit Laserlicht arbeitende Lichteffektanlage installiert ist. An einer Seitenwand 2 des
Raums 1 ist eine Laserlichtquelle 3 mittels Stützen angeordnet. Die Laserlichtquelle 3 ist z. B. ein wassergekühlter Argon-Laser. Die Lichtquelle beinhaltet außerdem eine hier
nicht näher dargestellte, an sich bekannte optische Bank,
die das von dem eigentlichen Laser abgegebene Licht mit
Hilfe eines oder mehrerer Spiegel nacheinander auf eine
oder mehrere der Lichteintrittsseiten $E_1 \ldots E_4$ mehrerer,
jeweils aus einer Vielzahl von Glasfasern bestehender Lichtleiterbündel 5, 5a, 5b und 5c gibt.

Die verschiedenen Liechtleiterbündel 5, 5a, 5b und 5c
führen zu verschiedenen, unter der Decke 4 der Diskothek
angebrachten Ablenksystemen. In Fig. 1 ist stellvertretend
für eine Vielzahl von Ablenksystemen ein einziges Ablenksystem 8 dargestellt, welches mittels einer Halterung 7
an der Decke 4 festgemacht ist. Im vorliegenden Fall ist
das Ablenksystem z. B. eine Spiegelkugel, die sich um eine
vertikale Achse dreht.

Das Lichtleiterbündel 5 führt unter der Decke 4 entlang
zu dem Ablenksystem 8. In der Nähe des Ablenksystems 8
wird das Endstück des Lichtleiterbündels von einer Halterung
6, die unter der Decke 4 befestigt ist, getragen.

Wie aus Fig. 2 hervorgeht, kann an der Lichtaustrittsseite
des Kabels 5 eine Optik 9 vorgesehen sein, so daß das
Licht an der Lichtaustrittsseite $A_1$ der Optik 9 z. B.
aufgeweitet wird, bevor es auf die Oberfläche des hier
als Spiegelkugel ausgebildeten Ablenksystems 8 fällt.
Von dem sich drehenden Ablenksystem 8 werden Lichtstrahlen R
reflektiert, die den Raum 1 überstreichen.

Die in Fig. 1 dargestellten Enden der weiteren Lichtleiterbündel 5a, 5b und 5c führen zu anderen Ablenksystemen,
bei denen es sich z. B. um weitere Spiegelkugeln, um Spektralgitter, Schwingspiel oder dergleichen handeln
kann. Der von der Laserlichtquelle 3 abgegebene Laserstrahl wird z.B. zyklisch auf die Eintrittsseiten $E_1 \ldots E_4$
der verschiedenen Lichtleiterbündel geschaltet, so daß
die den betreffenden Lichtleiterbündeln zugeordneten
Ablenksysteme nacheinander Lichtstrahlen mit bestimmten
Effekten abgeben.

In einer weiteren Ausführungsform kann das Ablenksystem
ein Reflektor oder ähnliches sein, so daß die Anlage
die gleiche Funktion wie eine Scheinwerferanordnung
besitzt, demgegenüber aber den Vorteil größerer Flexibilität und Vielseitigkeit aufweist.

Anstelle der Laserlichtquelle kann auch eine andere
Lichtquelle verwendet werden, z.B. eine Quecksilber-
Dampf-Lampe.

0202632
PATENTANWÄLTE
EUROPEAN PATENT ATTORNEYS

– / –

Werner Vögeli
Heinrichstrasse 248
CH-8005 Zürich

---

Lichteffektanlage für Diskotheken

---

P a t e n t a n s p r ü c h e

1.    Lichteffektanlage für Diskotheken und dergleichen, mit einer etwa punktförmigen Lichtquelle, mindestens einem Ablenksystem, auf das der von der Lichtquelle kommende Lichtstrahl gerichtet wird und das abgelenkte, z.B. gebündelte, reflektierte, bewegte oder gestreute Licht in die Umgebung abgibt,
dadurch g e k e n n z e i c h n e t, daß zwischen der Lichtquelle (3) und dem Ablenksystem (8) ein aus Glasfasern bestehendes Lichtleiterbündel (5) vorgesehen ist, auf dessen Lichteintrittsseite (E) die Lichtquelle (3) gerichtet ist und dessen Lichtaustrittsseite (A) auf das Ablenksystem (8) gerichtet ist.

2. Lichteffektanlage nach Anspruch 1,
dadurch g e k e n n z e i c h n e t, daß die Lichtquelle eine Laserlichtquelle ist.

3. Lichteffektanlage nach Anspruch 1,
dadurch g e k e n n z e i c h n e t, daß auf die
Lichtaustrittsseite (A) des Lichtleiterbündels (5)
eine Optik (9) aufgesetzt ist, die das Lichtstrahlenbündel aufweitet oder parallelisiert.

4. Lichteffektanlage nach Anspruch 2 oder 3,
dadurch g e k e n n z e i c h n e t, daß der
Laserlichtquelle (3) eine optische Bank nachgeordnet
ist, die mittels eines beispielsweise elektromechanisch verstellbaren Spiegels das Laserlicht
nacheinander auf die Lichteintrittsseite ($E_1...E_4$)
verschiedener, zu verschiedenen Ablenksystemen führender Lichtleiterbündel (5, 5a, 5b, 5c) gibt.

Fig.1

Fig.2